**Europäisches Patentamt**

**European Patent Office**

**Office européen des brevets**

(19)

(11) Veröffentlichungsnummer : **0 121 742**
**B1**

(12) EUROPÄISCHE PATENTSCHRIFT

(45) Veröffentlichungstag der Patentschrift :
11.01.89

(51) Int. Cl.⁴ : **G 01 N 27/28**, G 01 N 33/487

(21) Anmeldenummer : 84102279.1

(22) Anmeldetag : 02.03.84

(54) Gerät zur elektrochemischen Analyse elektrolytischer Bestandteile in einer Probenflüssigkeit.

(30) Priorität : 11.04.83 DE 3312922

(43) Veröffentlichungstag der Anmeldung :
17.10.84 Patentblatt 84/42

(45) Bekanntmachung des Hinweises auf die Patenterteilung : 11.01.89 Patentblatt 89/02

(84) Benannte Vertragsstaaten :
AT BE CH DE FR GB IT LI LU NL SE

(56) Entgegenhaltungen :
DE--A-- 2 829 783
DE--A-- 3 046 016
DE--B-- 2 851 532
US--A-- 3 657 095
US--A-- 4 342 964
ANALYTICAL CHEMISTRY, Band 46, Nr. 1, Januar 1974,Washington, USA; S. LIEBERMAN et al. "Anodic stripping voltammetry of zinc in seawater with a tubular mercury-graphite electrode ", Seiten 20-23

(73) Patentinhaber : BOEHRINGER MANNHEIM GMBH
Sandhofer Strasse 116
D-6800 Mannheim 31 (DE)

(72) Erfinder : Haar, Hans Peter, Dr. rer.nat.
Starenweg 2
D-8120 Weilheim (DE)
Erfinder : Edelmann, Hermann, Dipl.-Ing.
Diemendorfer Strasse 21
D-8132 Tutzing-Unterzeismering (DE)
Erfinder : Herrmann, Horst
Dorfstrasse 24
D-8139 Bernried (DE)
Erfinder : Thiery, Joachim, Dr.
Tiefenthaler Strasse 21
D-6718 Grünstadt (DE)

## Beschreibung

Die vorliegende Erfindung betrifft ein Gerät nach dem Oberbegriff des Anspruchs 1.

Elektrolytanalysatoren haben in den letzten Jahren, insbesondere bei der Analyse elektrolytischer Bestandteile von Körperflüssigkeiten, zunehmend an Bedeutung gewonnen. Insbesondere die Konzentration von Kalium und Natrium im Blut oder im Urin läßt sich mit Hilfe einer elektrochemischen Meßzelle schnell und einfach bestimmen und liefert wertvolle diagnostische Hinweise.

Elektrochemische Meßzellen haben stets zwei Elektroden, nämlich die eigentliche Meßelektrode und die Bezugs- oder Referenzelektrode. Die eigentliche Meßelektrode kann in verschiedenerlei Weise aufgebaut sein. In der klinischen Chemie sind insbesondere ionenselektive Elektroden gebräuchlich, welche in der Regel eine ionenselektive Membran, einen Ableitelektrolyten und ein Ableitelement aufweisen. Statt der Membran werden auch Festkörper-Elektrolyte, beispielsweise selektiv leitende Gläser oder keramische Materialien eingesetzt. Der Aufbau der Meßelektrode ist nicht Gegenstand der vorliegenden Erfindung, so daß hierauf nicht weiter eingegangen wird. Für die vorliegende Erfindung eignet sich vielmehr prinzipiell jede bekannte Meßelektrode. Die Meßelektrode wird mit der Probenflüssigkeit in Kontakt gebracht, um die Konzentration der zu analysierenden Ionen im Elektrolyten zu bestimmen. Wie erwähnt, wird hierzu die Spannung zwischen der Meßelektrode (d. h. deren Ableitelement) und einer Referenzelektrode bestimmt, die ebenfalls mit der Meßflüssigkeit in Kontakt steht. Um eine reproduzierbare Messung zu erreichen, muß die Referenzelektrode unabhängig von der Probenflüssigkeit stets das gleiche Bezugspotential liefern. Hierzu ist es notwendig, daß die Referenzelektrode einen Elektrolyten einschließt, der eine konstante Aktivität eines bestimmten Ionentyps aufweist. Dieser Referenzelektrolyt steht mit einem Ableitelement in Kontakt, wobei an der Kontaktstelle eine reversible Elektrodenreaktion stattfindet, die das konstante Referenzpotential liefert.

Es gibt eine Vielzahl von Konstruktionen für Referenzelektroden. In besonders günstigen Fällen ist es möglich, die Meßflüssigkeit selbst als Referenzelektrolyt zu verwenden, weil diese entweder von vornherein eine Ionenart, für die ein entsprechendes Ableitelement zur Verfügung steht, in konstanter Konzentration enthält, oder weil es möglich ist, die Probenflüssigkeit mit einer entsprechenden Elektrolytlösung zu vermischen, ohne die Messung im übrigen zu stören. Man erhält auf diese Weise eine sogenannte « Meßkette ohne Überführung ».

Bei der Analyse von menschlichen Körperflüssigkeiten ist es jedoch in der Regel nicht möglich, solche Meßketten ohne Überführung zu verwenden. Dies gilt insbesondere dann, wenn man die Elektrolytkonzentrationen ohne irgendwelche Vorbereitungsschritte unmittelbar aus dem Urin oder Blut bestimmen will. In diesem Fall kommen nur Referenzelektroden mit Überführung in Frage, d. h. Referenzelektroden, die einen eigenen in seiner Zusammensetzung von der Meßflüssigkeit verschiedenen Referenzelektrolyten aufweisen. Daraus ergibt sich unmittelbar das Problem, daß eine Elektrolytbrücke zwischen der Meßlösung und dem Referenzelektrolyten vorhanden sein muß, die einerseits die notwendige Ionenleitung (Diffusion) ermöglicht und andererseits die gegenseitige Durchmischung der beiden Flüssigkeiten ineinander so weit wie möglich behindert. Diese Kontaktzone zwischen Referenzelektrolyt und Meßflüssigkeit ist die häufigste Ursache für Probleme und Störungen bei der Verwendung elektrochemischer Meßzellen in der klinischen Chemie. Als Trennelemente zur Behinderung des Austausches zwischen den beiden Flüssigkeiten wurden verschiedene Formen von Fritten, Stopfen und anderen porösen Bauteilen vorgeschlagen, die jedoch alle stark zum Verstopfen neigen und schwer zu reinigen sind. In der klinischen Chemie haben sich deshalb besonders Schliffverbindungen bewährt, bei denen ein nicht gefetteter Glasschliff das trennende Element bildet, wobei der mit Elektrolyt gefüllte enge Spalt zwischen den Schliffteilen einen hinreichenden Ionentransport ermöglicht. Nachteilig an Schliffverbindungen ist allerdings ihr großer Elektrolytverbrauch, der dazu führt, daß diese Elektroden immer wieder neu befüllt werden müssen und die verhältnismäßig starke Verunreinigung der Meßlösung. Weitere Einzelheiten sind beispielsweise dem Buch von Karl Camman « Das Arbeiten mit ionenselektiven Elektroden », zweite Auflage, Springer-Verlag 1977, zu entnehmen.

Um unter anderem die Probleme mit der Konstruktion der Elektrolytbrücke zu vermeiden, wird bei manchen in der klinischen Chemie verwendeten Geräten im Durchflußverfahren gearbeitet. Dabei wird die Meßflüssigkeit über eine Leitung angesaugt, an der eine ionenselektive Meßelektrode angeordnet ist. In Strömungsrichtung hinter der Meßelektrode mündet eine zweite Leitung mit einer sehr kleinen Öffnung in die Probenflüssigkeitsleitung. Diese Leitung ist mit einem Salzbrückenelektrolyt gefüllt, der die ionenleitende Verbindung zu einer an dieser Leitung angeordneten Referenzelektrode herstellt. Im Betrieb strömt dabei ständig eine kleine Menge des Salzbrückenelektrolyts in die Probenleitung und wird mit der Probenflüssigkeit abgesaugt. Dadurch wird vermieden, daß Referenzelektrolytflüssigkeit oder der Salzbrückenelektrolyt in den Bereich der Meßelektrode oder Probenflüssigkeit in den Bereich der Referenzelektrode gelangen, weil das an der Einmündungsstelle entstehende Gemisch ständig abgesaugt wird. Ein derartiges Durchflußsystem ist jedoch aufwendig im Aufbau und hat einen verhältnismäßig hohen Verbrauch an Salzbrückenelektrolyt- und Probenflüssigkeit.

Es gibt auch recht verschiedene äußere Gestaltungen von elektrochemischen Meßzellen. So ist aus der deutschen Offenlegungsschrift 30 46 016 ein Elektrolyt-Analysator bekannt, bei dem die elektrochemische Messung mit der Möglichkeit kombiniert werden soll, eine Flüssigkeit innerhalb eines größeren Analysegerätes von einem Gefäß in ein anderes Gefäß zu transferieren. Deswegen ist die Meßelektrode, die in diesem Fall als ionenselektiver Feldeffekttransistor ausgebildet ist, an einer Leitung angeordnet, die gleichzeitig dem Ansaugen der Meßflüssigkeit dient. Die Referenzelektrode ist ebenfalls an der Leitung angeordnet und völlig konventionell ausgebildet. Die Ansaugvorrichtung, die zum Transferieren der Flüssigkeit notwendig ist, erfüllt gleichzeitig die Aufgabe, die Meßflüssigkeit so weit anzusaugen, daß sie sowohl mit der Meßelektrode als auch mit der Referenzelektrode in Kontakt steht, so daß eine elektrochemische Messung möglich ist.

Aufgabe der vorliegenden Erfindung ist es, einen elektrochemischen Elektrolyt-Analysator zu schaffen, der die beschriebenen, mit den Elektrolytbrücken verbundenen Probleme weitgehend vermeidet, dabei einfach im Aufbau und kostengünstig herzustellen ist und ein hohes Maß an Zuverlässigkeit erreicht.

Die Aufgabe wird durch das im Anspruch 1 gekennzeichnete Gerät gelöst.

Während bei dem in der deutschen Offenlegungsschrift 30 46 016 beschriebenen Gerät die Referenzelektrode in ihrer Gesamtheit an der Leitung angebracht ist und dort von der Meßflüssigkeit kontaktiert wird, d. h. an der Kontaktstelle eine Elektrolytbrücke aufweisen muß, an deren von der Leitung abgewandten Seite sich der Referenzelektrolyt und ein entsprechendes Ableitelement befinden, ragt bei der Konstruktion gemäß dem Anspruch 7 das Ableitelement selbst in die Leitung. Vor dem Ansaugen der Meßlösung ist die Leitung zumindest in ihrem unteren Teil, d. h. in der Nachbarschaft der Ansaugöffnung, mit der Referenzelektrolyt-Flüssigkeit gefüllt. Wird nun die Probenflüssigkeit angesaugt, so wird sie im Anschluß an den Referenzelektrolyten und in der gleichen Richtung wie dieser in der Leitung transportiert. Da gemäß dem Anspruch 7 das Ableitelement in Ansaugrichtung hinter der Meßelektrode angeordnet ist, erreicht die Kontaktzone zwischen beiden Flüssigkeiten zuerst die Meßelektrode und bei weiterem Transport der Flüssigkeiten wird ein Zustand erreicht, bei dem die Probenflüssigkeit die Meßelektrode und die Referenzflüssigkeit das Ableitelement kontaktiert, während beide Flüssigkeiten in einem Ionenaustausch ermöglichenden diffusiven Kontakt zueinander stehen. Dieser Betriebszustand des Gerätes wird als Meßbetriebszustand bezeichnet. In diesem Zustand wird die Spannungsmeßeinrichtung aktiviert, d. h. die Spannung zwischen der Meßelektrode und dem Ableitelement der Referenzhalbzelle gemessen.

Besonders bevorzugt wird ein Referenzelektrolyt verwendet, der zugleich die zu bestimmende Ionenart in bekannter Aktivität enthält. Ein derartiger Referenzelektrolyt bildet eine kombinierte Referenz/Standardlösung. Mißt man nun die Spannung in einem Betriebszustand, bei dem die Referenzelektrolytlösung gleichzeitig sowohl die Meßelektrode als auch das Ableitelement der Referenzhalbzelle kontaktiert, so mißt man die der bekannten Aktivität der zu bestimmenden Ionenart entsprechende Spannung, d. h. man mißt einen Eich- oder Kalibrationswert. Der entsprechende Betriebszustand wird deswegen auch als Kalibrationsbetriebszustand bezeichnet.

Die Verwendung einer kombinierten Referenz-/Standardlösung ist aus der US-Patentschrift 4,342,964 im Zusammenhang mit einer Vorrichtung zur pH-Wert-Bestimmung bekannt, die jedoch im übrigen verschieden aufgebaut ist. Im vorliegenden Fall erlaubt diese bevorzugte Maßnahme eine besonders einfache Handhabung. Es ist nämlich nicht mehr nötig, spezielle Eich- oder Standardmessungen durchzuführen. Vielmehr wird einfach der Referenzelektrolyt, der zugleich als Standard dient, angesaugt, die Eichmessung durchgeführt und anschließend die Probe nachgesaugt bis der Meßbetriebszustand erreicht wird und die unbekannte Aktivität der zu bestimmenden Ionenart in der Meßlösung gemessen werden kann. Im einzelnen können derartige Messungen auf vielerlei Weise durchgeführt werden, worauf später noch näher eingegangen wird.

Der Ansaugvorgang kann prinzipiell kontinuierlich erfolgen, wobei dann die Meßflüssigkeit so langsam angesaugt werden muß, daß der als Meßbetriebszustand definierte Zustand so lange anhält, wie für die Spannungsmessung benötigt wird. Bevorzugt ist jedoch eine stufenweise arbeitende Ansaugvorrichtung vorgesehen, bei der das Volumen einer Ansaugstufe so mit dem Leitungsvolumen abgestimmt ist, daß der Meßbetriebszustand erreicht wird. Dadurch steht mehr Zeit für die elektrochemische Messung zur Verfügung und der bauliche Aufwand wird reduziert.

Die erfindungsgemäße Elektrolytbrücke ist besonders vorteilhaft im Zusammenhang mit den zuvor beschriebenen Maßnahmen zu verwenden, wobei in diesem Fall ein besonderer Vorteil darin besteht, daß die Gasblase mit den Flüssigkeiten durch die Leitung beweglich ist und somit ständig die Vermischung von Referenzelektrolyt und Probenflüssigkeit in der gewünschten Art und Weise behindert wird.

Mit der Konstruktion gemäß der Erfindung lassen sich die an eine Elektrolytbrücke in einem elektrochemischen Analysegerät zu stellenden gegensätzlichen Forderungen in idealer Weise erreichen. Es sind dies insbesondere :

a) Einerseits die Forderung, daß die Querschnittsfläche der Grenzfläche zwischen den flüssigen Phasen auf beiden Seiten der Elektrolytbrücke wie erwähnt so klein sein muß, daß die Durchmischung zwischen beiden Phasen nicht zu einer die Meßgenauigkeit beeinträchtigenden Veränderung der Konzentration der beiden Flüssigkeiten im Bereich der Meßelektrode einerseits und des Referenz-Ableitelementes andererseits führt.

b) Andererseits die Forderung, daß der nötige nichtselektive Ionenaustausch zwischen beiden Phasen über die Elektrolytbrücke hinweg gewährleistet sein muß. Diese Forderung ergibt sich nicht nur daraus, daß der Gesamtwiderstand der elektrochemischen Meßzelle, der durch den Widerstand der Elektrolytbrücke wesentlich mitbestimmt wird, erheblich kleiner (mindestens um einen Faktor 100) als der Widerstand des Meßgerätes sein muß, sondern sie basiert auch auf einem elektrochemischen Grund, nämlich daß die Austauschstromdichte der Ionen an den Phasengrenzflächen stets erheblich größer sein muß als die durch den Meßstrom verursachte Stromdichte. Wäre diese Bedingung nicht erfüllt, so würde das thermodynamische Gleichgewicht in einem die Meßgenauigkeit beeinträchtigenden Ausmaß gestört.

Die Elektrolytbrücke gemäß der Erfindung erfüllt nicht nur diese gegenläufige Forderungen, sondern sie vermeidet darüber hinaus die eingangs erwähnten Verstopfungs- und Reinigungsprobleme. Dies ist insbesondere eine Folge der Tatsache, daß die Gasblase in unmittelbarem Kontakt mit der sie überbrückenden Flüssigkeitsverbindung steht. Wenn im Gegensatz dazu die Flüssigkeitsverbindung in einer Weise realisiert würde, bei der die Flüssigkeit keinen Kontakt zu der Gasblase hat, beispielsweise in der Weise, daß ein kapillarförmiges mit Flüssigkeit gefülltes Röhrchen den Bereich der trennenden Luftblase überbrückt, so würde dies zwangsläufig bedingen, daß der Kanal, soweit er hinreichend eng ist, um die notwendige Trennung der Flüssigkeiten zu gewährleisten, auf der anderen Seite wiederum zur Verstopfung neigen würde. Damit wäre also gegenüber den bekannten Konstruktionen nichts gewonnen.

Die in unmittelbarem Kontakt mit der Gasblase stehende Flüssigkeitsverbindung wird durch Grenzflächenkraft aufrechterhalten. Das kann im einfachsten Fall dadurch realisiert werden, daß die die Gasblase umgebenden Wandungen aus einem von der Flüssigkeit benetzten Material bestehen, d. h. daß die Adhäsionskräfte zwischen den Flüssigkeitsteilchen und der Wandung größer sind als die Kohäsionskräfte zwischen den Flüssigkeitsteilchen untereinander. Diese Bedingung ist für die meisten im klinischen Labor üblichen Gläser und Kunststoffe erfüllt. Praktische Versuche haben aber ergeben, daß durch den sich im Bereich der Gasblase an der Wandung in diesem Fall bildenden Flüssigkeitsfilm nur dann ein ausreichender diffusiver Kontakt zwischen den Flüssigkeiten gewährleistet ist, wenn die Größe der Gasblase sehr präzise so dimensioniert ist, daß sie nur gerade eben die Verbindungsleitung zwischen beiden Flüssigkeiten an der Stelle, an der die Elektrolytbrücke vorgesehen ist, ausfüllt. Insofern ist eine bevorzugte Ausführungsform der Erfindung besonders vorteilhaft, bei der die Flüssigkeit der Flüssigkeitsverbindung mit festen, von der Flüssigkeit benetzten Oberflächen in Kontakt steht, die so dicht beieinander angeordnet sind, daß die Flüssigkeit durch Grenzflächenkraft zwischen ihnen festgehalten wird. Bei dieser Konstruktion macht man sich den bekannten Kapillareffekt zunutze, der darin besteht, daß sich ein enger Spalt aufgrund der wirksamwerdenden Grenzflächenkräfte mit Flüssigkeit füllt, wenn die ihn begrenzenden Oberflächen von der Flüssigkeit benetzt werden und eng genug beieinander angeordnet sind. Die Steighöhe, um die die Flüssigkeit in einem senkrecht angeordneten engen Spalt gegen die Wirkung der Erdanziehungskraft ansteigt, hängt dabei in bekannter Weise von den Benetzungseigenschaften der Oberflächen und der Flüssigkeit sowie von der Spaltbreite ab. Da die Luftblase für die erfindungsgemäßen Zwecke in der Regel sehr klein ist, genügt für die Zwecke der vorliegenden Erfindung eine Flüssigkeitsverbindung von maximal einigen Millimeter Länge. Mit den in der Labortechnik üblichen Materialien, insbesondere Kunststoffen, lassen sich dabei ohne weiteres Konstruktionen realisieren, die Spalte aufweisen, welche auch bei senkrechter Einbaulage vollständig aufgrund des Kapillareffekts mit Flüssigkeit gefüllt werden. Einige Beispiele solcher Konstruktionen werden weiter unten näher beschrieben.

Die Elektrolytbrücken-Konstruktion gemäß der vorliegenden Erfindung läßt sich sehr kostengünstig realisieren. In Fällen, in denen eine ortsfeste Elektrolytbrücke in einer im übrigen konventionellen elektrochemischen Meßzelle benötigt wird, kann man an der Stelle, an der sonst die Fritte oder der Glasschliff vorgesehen gewesen wäre, ein nach unten offenes Gehäuse (« Topf ») für die Gasblase vorsehen, in das eine Leitung zur Zuführung des Gases mündet. Die beiden mit der Elektrolytbrücke zu verbindenden Flüssigkeiten können dann auf beiden Seiten des Topfes in einer Weise angeordnet werden, auf die weiter unten noch näher eingegangen wird.

Soweit die Gasblasen-Elektrolytbrücke im Zusammenhang mit dem Gerät gemäß Anspruch 7 benutzt wird, wird sie einfach dadurch realisiert, daß zwischen der Referenzflüssigkeit und der Probenflüssigkeit eine Gasblase in die Leitung angesaugt wird, die dann zusammen mit beiden Flüssigkeiten durch die Leitung gesaugt wird und dabei eine schnelle Durchmischung zuverlässig verhindert. Die notwendige Flüssigkeitsverbindung wird dabei durch in der Leitung vorgesehene Einsatzelemente realisiert, die so konstruiert sind, daß die Flüssigkeit durch Grenzflächenkraft zwischen dicht beieinander benachbarten Oberflächen im Bereich der Gasblase aufgespannt wird.

Im folgenden wird die Erfindung anhand von in den Figuren dargestellten besonders bevorzugten Ausführungsbeispielen näher erläutert. Es zeigen :

Fig. 1 eine Prinzipdarstellung einer elektrochemischen Meßkette gemäß dem Stand der Technik, die als Elektrolyt-Analysator verwendet werden kann ;

Fig. 2 eine schematische Darstellung eines Elektrolyt-Analysators im wesentlichen im Querschnitt, beider jedoch keine Gasblase gemäß der Erfindung verwendet wird ;

Fig. 3 eine Prinzipdarstellung der Funktionsweise eines Elektrolyt-Analysators, wobei fünf verschiedene Betriebszustände A bis E dargestellt sind, jedoch keine Gasblase gemäß der Erfindung verwendet wird.

Fig. 4 eine Prinzipdarstellung der Funktionsweise eines erfindungsgemäßen Elektrolyt-Analysators mit teilweise automatischen Funktionen in fünf verschiedenen Betriebszuständen A bis E ;

Fig. 5A) bis C) drei verschiedene Ausführungsformen einer im Zusammenhang mit dem erfindungsgemäßen Elektrolyt-Analysator zur Anwendung kommenden Elektrolytbrücke in schematischer Darstellung ;

Fig. 6A) bis C) eine vereinfachte Darstellung einer bevorzugten Ausführungsform eines erfindungsgemäßen Gerätes, bei der die Meßelektrode, die Ableitelektrode der Referenzhalbzelle und die Leitung zwischen Ansaugöffnung und Ableitelektrode Teile einer auswechselbaren Baugruppe des Elektrolyt-Analysators sind, die den Referenzelektrolyten vorgepackt enthält ;

Fig. 7A) bis C) eine schematische Darstellung der auswechselbaren Baugruppe aus Fig. 6 zur Erläuterung der Funktionsweise und

Fig. 8 eine schematisierte Querschnittsdarstellung eines erfindungsgemäßen Referenzhalbelementes für im übrigen konventionell aufgebaute Elektrolyt-Analysatoren.

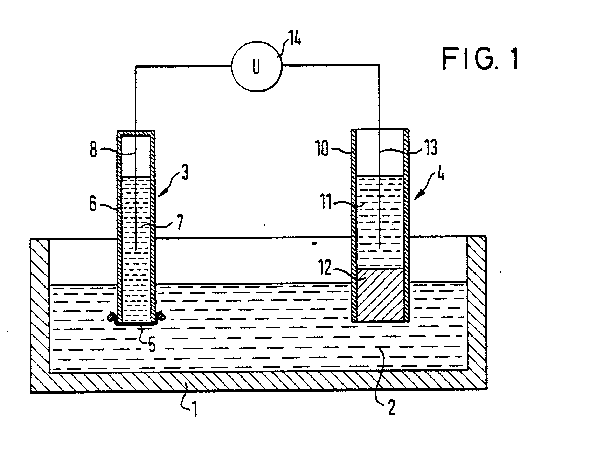

Fig. 1 zeigt eine elektrochemische Meßkette gemäß dem Stand der Technik mit einem Behälter 1, in dem sich eine Probenflüssigkeit 2 befindet. In die Probenflüssigkeit 2 tauchen eine ionenselektive Meßelektrode 3 und ein Referenzhalbelement 4.

Die ionenselektive Elektrode ist in bekannter Weise aufgebaut und schließt eine ionenselektive Membran 5 ein, die die untere Öffnung eines entsprechenden Gehäuses 6 dichtend abschließt. In dem Gehäuse befindet sich ein Elektrolyt 7, in den ein Ableitelement 8 ragt. Ein derartiger prinzipieller Aufbau einer ionenselektiven Meßelektrode wird häufig verwendet. Es sind dem Fachmann jedoch zahlreiche andere Ausführungsformen bekannt. Grundsätzlich lassen sich für die Erfindung die verschiedensten Arten von Meßelektroden verwenden, soweit sie nur in Kontakt mit der Meßlösung eine für die betreffende Ionenart spezifische Halbzellenspannung liefern.

Wie bekannt, ermöglicht eine ionenselektive Elektrode alleine noch keine Aktivitäts- bzw. Konzentrationsmessung. Erst in Verbindung mit einem Referenzhalbelement 4 ist es möglich, eine Spannung zu messen, die entsprechend der Nernst'schen Gleichung Aufschluß über die Aktivität der zu detektierenden Ionen gibt. Fig. 1 zeigt den prinzipiellen Aufbau eines solchen Referenzhalbelementes. Es hat ein rohrförmiges Gehäuse 10, in dem sich ein Referenzelektrolyt 11 befindet. Das Gehäuse ist nach unten nicht vollständig verschlossen, sondern weist eine Elektrolytbrücke 12 auf, durch die einerseits die Vermischung des Referenzelektrolyten 11 mit der Probenflüssigkeit 2 weitgehend verhindert wird, andererseits der für eine Ionenleitung zwischen beiden Flüssigkeiten notwendige diffusive Kontakt ermöglicht wird.

In die Referenzelektrolytflüssigkeit 11 taucht ein Ableitelement 13 ein. Ein Spannungsmeßgerät 14 ist vorgesehen, um die Spannung zwischen den Ableitelementen 8 und 13 und damit die Meßspannung der elektrochemischen Meßkette zu messen. Das Spannungsmeßgerät ist nur schematisch dargestellt. Wie dem Fachmann ohne weiteres bekannt ist, werden an für elektrochemische Meßzellen geeignete Spannungsmeßgeräte hohe Anforderungen gestellt. Insbesondere muß es einen sehr hochohmigen Eingang haben und zum reproduzierbaren Nachweis kleiner Spannungen geeignet sein. Derartige Geräte sind für diesen Zweck jedoch bekannt und kommerziell erhältlich, so daß hier nicht weiter darauf eingegangen werden muß.

Das Referenzhalbelement 4 kann in vielerlei verschiedener Art und Weise aufgebaut sein. Zahlreiche Ausführungsformen der Elektrolytbrücke 12 sind bekannt, die beispielsweise in dem weiter oben zitierten Buch von Camman ausführlich dargestellt werden. Ihnen ist gemeinsam, daß der Referenzelektrolyt 11 für eine Vielzahl von Messungen im wesentlichen unverändert in dem Gehäuse 10 bleibt und daß die Elektrolytbrücke 12 einen oder meist eine Vielzahl von sehr kleinen Kanälen einschließt, die durch entsprechende Bauteile, beispielsweise Fritten, Glasschliffe, Dochte, keramische Materialien und dergleichen realisiert werden. Wie weiter oben erwähnt und in dem zitierten Buch dargestellt, haften jedoch allen diesen Ausführungsformen Nachteile bezüglich der Einfachheit der Bedienung und der Genauigkeit und Reproduzierbarkeit über eine Vielzahl von Messungen an.

Auch das System aus Ableitelement 13 und Referenzelektrolyt 11 kann in vielerlei Weise gestaltet sein. Häufig verwendet wird beispielsweise das Silber/Silberchlorid-System. In diesem Fall enthält der Referenzelektrolyt Chloridionen in einer bestimmten festen Konzentration. Als Ableitelement wird ein Silberdraht verwendet, der mit einer Silberchloridschicht überzogen ist. Es ist ein Überschuß an festem Silberchlorid vorhanden. Dadurch wird wegen des bei gegebener Temperatur festen Löslichkeitsprodukts die Konzentration der Silberionen an die Konzentration der Chloridionen gekoppelt. Am Ableitelement 13 spielt sich eine reversible Elektrodenreaktion ab :

$$Ag^- + e^- \longleftrightarrow Ag$$

Dieser reversiblen Elektrodenreaktion entspricht, da sowohl die Aktivität des Silbers als auch die der Silberionen konstant sind, eine bestimmte Halbzellenspannung.

Ein anderes praktisch gebräuchliches Referenzsystem ist das Thalliumamalgam/Thallium-I-Chlorid-System, das ähnlich wie das Silber/Silberchlorid-System aufgebaut ist.

Es gibt jedoch auch erheblich abweichende Referenzhalbzellen, bei denen andere Arten von Ableitelementen eingesetzt werden. Hierzu gehören Referenzhalbzellen, die ihrerseits wiederum ionenselektive Elektroden verwenden. Bei solchen Referenzhalbzellen enthält der Referenzelektrolyt diejenige lonenart, für die die ionenselektive Elektrode selektiv ist, in fester Aktivität. Bei Verwendung einer Natrium-Glaselektrode sind dies zum Beispiel Natriumionen. In manchen Fällen lassen sich auch die bekannten pH-Elektroden als Ableitelemente verwenden, wobei dann der Referenzelektrolyt eine bestimmte H⁻-lonenkonzentration haben muß, d. h. er wird auf einen bestimmten pH-Wert gepuffert.

Allen diesen Ausführungsformen ist gemeinsam, daß das Ableitelement mit dem Referenzelektrolyten eine reversible elektrochemische Reaktion macht und der Referenzelektrolyt die entsprechende lonenart in einer festen Konzentration enthält. Dadurch ergibt sich eine konstante Halbzellenspannung, die unabhängig davon ist, mit welcher Probenflüssigkeit 2 der Referenzelektrolyt 11 über die Elektrolytbrücke 12 in Kontakt steht. Die Meßspannung, die das Meßgerät 14 mißt, ist somit nur noch abhängig von der Halbzellenspannung der Meßelektrode 3, die ihrerseits ein Maß für die Konzentration bzw. Aktivität der zu analysierenden lonenart in der Probenflüssigkeit 2 ist.

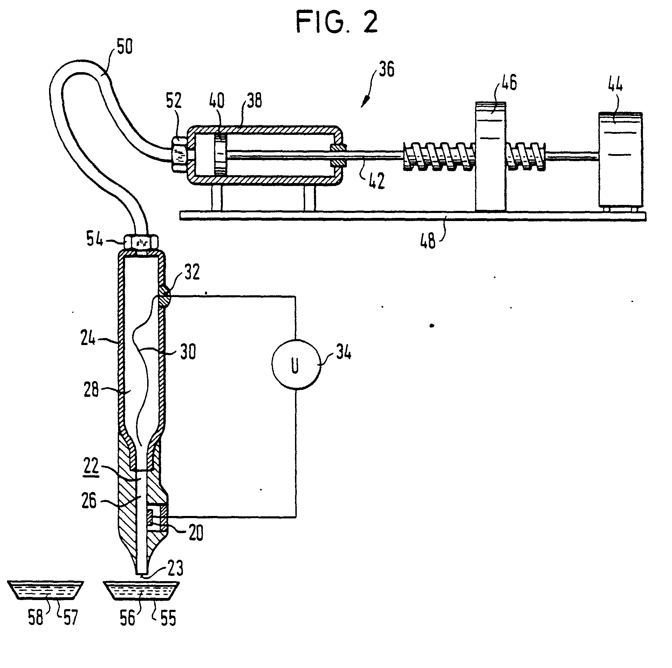

In Fig. 2 ist eine Ausführungsform eines elektrochemischen Elektrolyt-Analysators schematisch, im wesentlichen im Querschnitt, dargestellt beider jedoch keine Gasblase gemäß der Erfindung eingezeichnet ist. Die Meßelektrode 20 ist dabei an einer Leitung 22 angeordnet, die sich ihrerseits in einem ähnlich einer im klinisch-chemischen Labor gebräuchlichen Handpipette gestalteten Gehäuse 24 befindet. Die Leitung 22 besteht aus einem unteren Teil 26, der rohrförmig ausgebildet ist und aus einem gegenüber dem unteren Teil 26 erweiterten oberen Teil 28. Am oberen Teil 28 des Gehäuses 24 ist das Ableitelement 30 der Referenzhalbzelle angebracht. In der dargestellten Ausführungsform ist dies ein einfacher Draht, beispielsweise ein chlorierter Silberdraht, der mittels einer Durchführung 32 flüssigkeitsdicht in den oberen Teil 28 der Leitung 22 eingeführt ist, so daß er von einer in der Leitung 22 befindlichen Flüssigkeit kontaktiert werden kann. Die Meßelektrode 20 und das Ableitelement 30 sind an eine Spannungsmeßeinrichtung 34 angeschlossen, die die weiter oben erwähnten Eigenschaften aufweist.

Weiterhin ist eine Ansaugvorrichtung vorgesehen, die in ihrer Gesamtheit mit dem Bezugszeichen 36 bezeichnet ist. Sie besteht im wesentlichen aus einem Zylinder 38 mit zugehörigem Kolben 40, dessen Kolbenstange 42 mit einem Antrieb verbunden ist, um den Kolben 40 in dem Zylinder 38 hin und her zu bewegen. In der dargestellten Ausführungsform besteht der Antrieb aus einem Elektromotor 44 und einem Spindeltrieb 46, die zusammen mit der Kolben-Zylinder-Einheit 38, 40 auf einer Grundplatte 48 montiert sind. Statt der dargestellten Ausführungsform kann als Ansaugvorrichtung beispielsweise auch ein Ventilsystem vorhanden sein, das einerseits mit einer Überdruckquelle und andererseits mit einer Unterdruckquelle verbunden ist. Die Ventile müssen bei einer derartigen Ausführungsform zum Ansaugen so geschaltet werden, daß sie die Leitung 22 mit der Unterdruckquelle verbinden, während sie zum Ausstoßen eine Verbindung zu·der Überdruckquelle herstellen. Zahlreiche andere Ausführungsformen einer Ansaug- und Ausstoßvorrichtung sind dem Fachmann geläufig und für die Erfindung geeignet. Die Ansaugvorrichtung 36 ist über einen Schlauch 50 und Anschlußstücke 52 und 54 mit der Leitung 22 verbunden. Unter der Ansaugöffnung befindet sich eine Schale 55 mit Referenzelektrolytflüssigkeit 56. Weiterhin ist eine Schale 57 mit Probenflüssigkeit 58 bereitgestellt, so daß das Gerät in Funktion gesetzt werden kann.

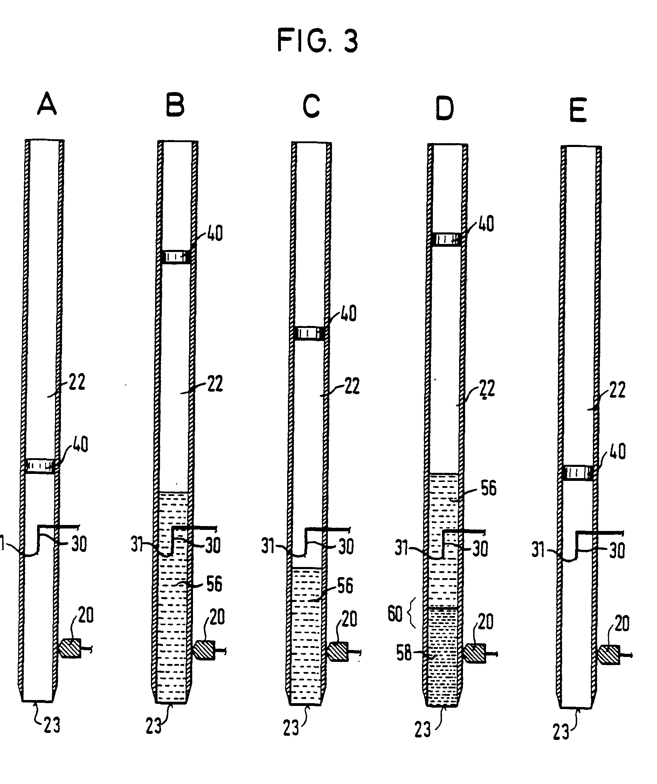

Die Funktionsweise wird im folgenden anhand der Fig. 3 näher erläutert, wobei jedoch die Erzeugung und Aufrechterhaltung der Gasblase gemäß der Erfindung fehlt. Man erkennt in stark schematisierter Darstellung die fünf verschiedenen Betriebszustände A, B, C, D und E. Entsprechende Teile sind mit den gleichen Bezugszeichen wie in Fig. 2 bezeichnet. Man erkennt die Leitung 22 mit der Ansaugöffnung 23. Nahe der Ansaugöffnung ist die Meßelektrode 20 an der Leitung 22 angeordnet, während das Ableitelement 30 für die Referenzhalbzelle weiter entfernt von der Ansaugöffnung 23, also in Ansaugrichtung hinter der Meßelektrode 20, angeordnet ist. Bei der dargestellten Ausführungsform ist die Leitung 22 durchgehend mit gleichem Durchmesser ausgebildet. In ihrem oberen Teil befindet sich ein Kolben 40, der zum Ansaugen und Ausstoßen dient.

Fig. 3A) zeigt das Gerät leer im Ausgangszustand. Der Kolben 40 befindet sich in seiner untersten Stellung.

Zur Erläuterung der Funktionsweise wenden wir uns nun zunächst Fig. 3C) zu. Diese zeigt einen Betriebszustand, bei dem eine bestimmte Menge Referenzelektrolytflüssigkeit angesaugt worden ist, auf deren Bemessung noch später eingegangen wird. Der Kolben 40 befindet sich in einer entsprechenden höheren Stellung. Nun wird die Ansaugöffnung 23 in Probenflüssigkeit getaucht und der Kolben 40 wird weiter nach oben bewegt, bis der in Fig. 3D) dargestellte Betriebszustand erreicht ist, der als Meßbetriebszustand bezeichnet wird. In diesem Zustand ist so viel Probenflüssigkeit in unmittelbarem Anschluß an die Referenzflüssigkeit angesaugt worden, daß die Probenflüssigkeit 58 die Meßelektrode 20 kontaktiert, während das Ableitelement 30 mit dem Referenzelektrolyten 56 in Kontakt steht. Beide Flüssigkeiten befinden sich in einer Kontaktzone 60 in Kontakt miteinander. Damit ist die elektrochemische Meßkette geschlossen, d. h. die Spannungsmeßeinrichtung, die in dieser Figur nicht dargestellt ist, kann aktiviert werden, um die Spannung der Meßkette zu messen.

Selbstverständlich beginnt im Bereich der Kontaktzone sofort eine Vermischung beider Flüssigkeiten im wesentlichen durch Konvektion. Deshalb ist es erforderlich, daß das Ansaugen und die Messung relativ schnell erfolgen, nämlich bevor durch die Vermischung die Konzentration im Bereich der Meßelektrode 20 bzw. des Ableitelementes 30 verändert und dadurch durch die Messung verfälscht wird.

Der geschilderte Ansaugvorgang vom leeren Ausgangszustand A über den Zustand C bis zum Zustand D kann langsam und kontinuierlich erfolgen, wobei dann durch geeignete, dem Fachmann geläufige Mittel sichergestellt werden muß, daß die Spannungsmeßeinrichtung im richtigen Moment aktiviert wird, d. h. wenn sich die Kontaktzone 60 zwischen der Meßelektrode 20 und dem Ableitelement 30 befindet. Bevorzugt wird aber die Ansaugvorrichtung stufenweise betrieben, d. h. der Kolben 40 bleibt jeweils in den dargestellten Positionen stehen, um bei Position C das Eintauchen in die Probenflüssigkeit und bei Position D die Durchführung der Messung zu ermöglichen.

Nach erfolgter Messung wird der Kolben 40 nach unten bewegt bis zu der in Fig. 3E) dargestellten Position, bei der die Leitung 22 entleert und die Ausgangsposition wieder erreicht ist.

Bei elektrochemischen Messungen wird üblicherweise nicht der absolute Meßwert herangezogen, um die Konzentration der zu analysierenden Substanz zu ermitteln, sondern es werden Kalibrationsmessungen durchgeführt, bei denen eine Standardflüssigkeit verwendet wird, die die zu bestimmende Ionenart, also beispielsweise Natrium oder Kalium, in einer bekannten Konzentration enthält. Bei der oben dargestellten Funktionsweise des Gerätes erfolgt dies, indem in genau der gleichen Weise wie beschrieben, statt der Probenflüssigkeit 58 die Standardflüssigkeit angesaugt und bei Erreichen des Meßbetriebszustandes die entsprechende Kalibrationsspannung gemessen wird.

Besonders vorteilhaft ist es jedoch, wenn die Referenzelektrolyt-Flüssigkeit nicht nur die für die Funktion der Referenzhalbzelle notwendige Ionenart, also bei dem geschilderten Beispiel Chloridionen, in einer konstanten Konzentration enthält, sondern die gleiche Lösung zugleich als Standard dient und zu diesem Zweck auch die zu bestimmende Ionenart, also beispielsweise Natriumionen, in einer konstanten und bekannten Konzentration enthält.

Die Funktionsweise eines solchen Geräts schließt die Stufe B ein. In diesem Fall wird nach Eintauchen der Ansaugöffnung 23 in die Referenz/Standardlösung 56 der Kolben bis zu der in Fig. 3B) dargestellten Stellung nach oben bewegt, d. h. so weit, bis die Flüssigkeit sowohl die Meßelektrode 20 als auch das Ableitelement 30 berührt. In diesem Zustand kann die Kalibrationsspannung sehr genau bestimmt werden, da es sich hier um eine Meßzelle ohne Überführung handelt, also keine Kontaktzone zwischen zwei verschiedenen Flüssigkeiten mit den daraus resultierenden Strömungsmöglichkeiten vorhanden ist.

Nach der Kalibrationsmessung (Kalibrationsbetriebszustand B) wird der Kolben wieder nach unten bewegt, um einen Teil der Referenz/Standardlösung 56 wieder auszustoßen. Danach erfolgt das Ansaugen der Probenflüssigkeit 58 und Messen der Meßspannung im Meßbetriebszustand D, wie zuvor beschrieben.

Die notwendige Menge von Referenzflüssigkeit, die zur Erreichung des Betriebszustandes C angesaugt wird, bzw. bei der zuletzt geschilderten Alternative, nach dem Ausstoßen in der Leitung 22 verbleibt, ist verhältnismäßig unkritisch. Im Prinzip würde eine sehr kleine Menge ausreichen, die gerade so groß ist, daß die Kontaktzone 60 im Meßbetriebszustand D vom unteren Ende 31 des Ableitelementes 30 hinreichend weit entfernt ist, um zu gewährleisten, daß die Vermischung während der Meßzeit nicht bis zu diesem Punkt gelangt. In der Praxis ist jedoch bevorzugt die Menge der Referenzflüssigkeit mindestens etwa ebenso groß wie die Menge der Probenflüssigkeit. Ein besonderer Vorteil dieser Vorrichtung besteht nämlich darin, daß die Referenzflüssigkeit zugleich die Leitung 22 reinigt, wenn der Kolben zwischen den Zuständen D und E nach unten wandert und beide Flüssigkeiten ausstößt. Hierzu ist es zweckmäßig, wenn die Menge Referenzflüssigkeit relativ groß ist. Aus diesem Grund ist auch bei der in Fig. 2 dargestellten Ausführungsform der obere Teil 28 der Leitung 22 mit einem größeren Querschnitt ausgebildet, um eine im Vergleich zu der Probenflüssigkeitsmenge erheblich größere Menge an Referenzflüssigkeit aufzunehmen.

Im praktischen Betrieb ist es zweckmäßig, die Referenzflüssigkeit nach jeder Messung zu erneuern, um eine hohe Genauigkeit zu erreichen. Es sei jedoch betont, daß in Ausnahmefällen auch eine andere Betriebsweise möglich und eventuell sinnvoll ist, bei der die Referenzflüssigkeit über mehrere Meßvorgänge in der Leitung verbleibt und durch die Ansaugeinrichtung hin und her bewegt wird, wobei jeweils nur die Probenflüssigkeit und ein kleiner verunreinigter Teil der Referenzflüssigkeit ausgestoßen wird.

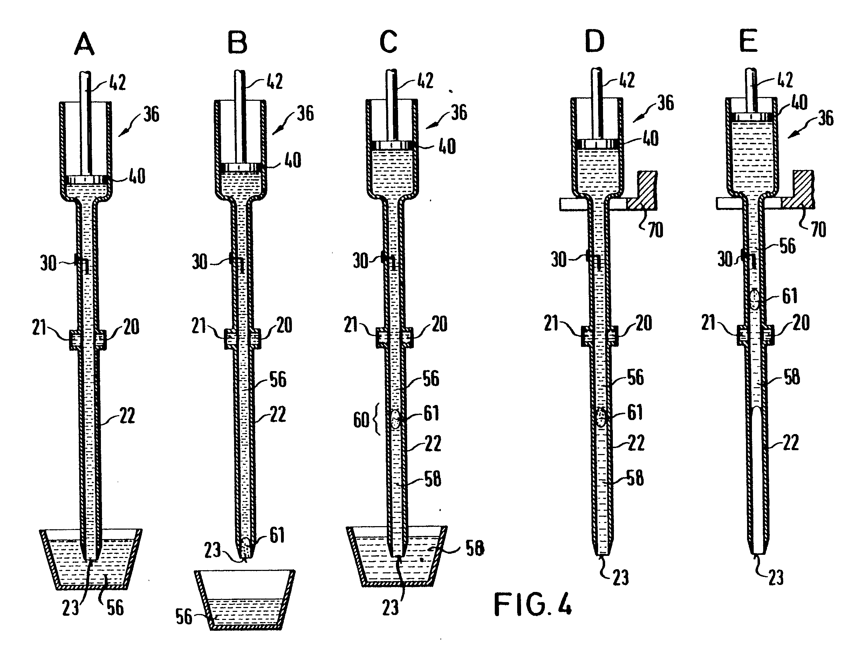

Fig. 4 zeigt eine ähnliche Darstellung wie Fig. 3, wobei nun jedoch eine Ausführungsform des erfindungsgemäßen Gerätes zur Anwendung kommt, dessen Funktionsweise sich in einigen Einzelheiten von der zuvor beschriebenen unterscheidet. Es werden wiederum für entsprechende Teile gleiche Bezugszeichen verwendet und im folgenden nur die Unterschiede gegenüber der zuvor gegebenen Darstellung beschrieben.

Der in Fig. 4 dargestellte Elektrolyt-Analysator weist zwei verschiedene ionenselektive Elektroden als Meßelektroden 20 und 21 auf. Damit können gleichzeitig zwei verschiedene Ionenarten, beispielsweise Natrium and Kalium, bestimmt werden. Selbstverständlich müssen dann zwei Standardmessungen zur Kalibration durchgeführt werden, was vorzugsweise dadurch geschieht, daß die Referenz/Standardlösung beide zu analysierenden Ionenarten in bekannten Konzentrationen enthält.

Die Funktionsweise des in Fig. 4 dargestellten Elektrolyt-Analysators unterscheidet sich weiterhin insofern, als bis zur Erreichung des Meßbetriebszustandes nur Ansaugvorgänge und keine Ausstoßvorgänge durchgeführt werden. Die Zustände A, B und C werden dabei von einem Benutzer durch manuelle Betätigung, beispielsweise eines nicht dargestellten Betätigungsknopfes, herbeigeführt, der mit dem Kolben 40 über die Kolbenstange 42 in Verbindung steht. Das Gerät kann in einer im Pipettenbau gebräuchlichen Weise mit einer entsprechenden Rasterung oder Volumeneinstellung versehen sein, um dem Benutzer die Einstellung der Kolbenstellungen A, B und C zu erleichtern.

Im einzelnen wird zur Erreichung des Betriebszustandes A zuerst Referenz/Standardlösung angesaugt. Danach wird die Ansaugöffnung 23 aus der Referenzelektrolyt-Flüssigkeit 56 herausgezogen und der Kolben ein kleines Stückchen bewegt, um eine geringe Menge Luft anzusaugen. Danach wird die Ansaugöffnung 23 in die Probenflüssigkeit 58 getaucht und weiter angesaugt, bis eine ausreichende Menge Probenflüssigkeit in der Leitung 22 vorhanden ist.

Durch das Ansaugen von Luft wird bei der in Fig. 4 dargestellten Ausführungsform von der Erfindung Gebrauch gemacht, nämlich einer Elektrolytbrücke, bei der eine zwischen den Flüssigkeiten angeordnete Gasblase durch mindestens eine durch Grenzflächenkraft aufrechterhaltene Flüssigkeitsverbindung elektrolytisch überbrückt ist, wobei die Flüssigkeitsverbindung in unmittelbarem Kontakt mit der Gasblase steht. Dadurch sind die beiden Flüssigkeiten 56 und 58 nicht mehr großflächig in Kontakt miteinander, sondern durch die Luftblase 61 voneinander getrennt. Dadurch wird die Vermischung der beiden Flüssigkeiten miteinander entscheidend reduziert. Dennoch ist über die Luftblase hinweg ein Ionenaustausch in dem Maße möglich, wie er zur Funktion der elektrochemischen Meßkette notwendig ist. Weitere Einzelheiten werden weiter unten beschrieben.

Nach Erreichen des Betriebszustandes C wird der Elektrolyt-Analysator in ein Gerät eingesetzt, das die weiteren Schritte automatisch durchführt und auch die Spannungsmeßeinrichtung enthält.

Die Zeichnung ist, um der Klarheit der Darstellung willen, stark schematisiert. Man erkennt von dem Gerät lediglich den Tragarm 70, der den Elektrolyt-Analysator in beliebiger Weise festhält. Gleichzeitig wird der elektrische Kontakt zu den ionensensitiven Elektroden 20 und 21 und zu dem Ableitelement 30 geschlossen.

Um eine besonders hohe Genauigkeit zu erreichen, arbeitet das Gerät in einem bestimmten Zeittakt. Zunächst wird in dem in Fig. 4D) dargestellten Kalibrationsbetriebszustand die Kalibrationsmessung durchgeführt. Danach wird bis zu dem Zustand E, der dem Meßbetriebszustand entspricht, weiter angesaugt. Die Messung erfolgt zu einem bestimmten, experimentell festgelegten Zeitpunkt, bei dem sich einerseits ein stabiler Zustand eingestellt hat und andererseits keine Verfälschung des Meßergebnisses durch störende Vorgänge eintreten konnte. Beim Ansaugen vom Zustand D zum Zustand E wurde Luft in den unteren Teil der Leitung 22 angesaugt, was jedoch keinen Einfluß auf das Meßergebnis hat. Nach erfolgter Messung wird die gesamte Flüssigkeit, wie zuvor beschrieben, ausgestoßen.

Die Verwendung eines Gasblase, insbesondere einer Luftblase, zur Trennung der beiden Flüssigkeiten bietet, wie leicht einzusehen ist, erhebliche Vorteile, weil der Referenzelektrolyt und die Meßflüssigkeit sich nur verhältnismäßig langsam vermischen können. Dadurch wird die Präzision der Messung entscheidend verbessert. Zu betonen ist, daß die Luftblase beide Flüssigkeiten während des gesamten Ansaug- und Ausstoßvorganges trennt, während eine entsprechende Konstruktion der Leitung beispielsweise eine den Flüssigkeitsaustausch behindernde Verengung in dem Bereich, in dem sich die Kontaktzone 60 zwischen beiden Flüssigkeiten im Meßbetriebszustand befindet, nur während dieses Zustandes die gewünschte Trennwirkung erreichen könnte.

Um trotz der Trennung durch die Luftblase eine Elektrolytbrücke zwischen beiden Flüssigkeiten aufrechtzuerhalten, wie dies zur Funktion der elektrochemischen Meßkette notwendig ist, werden Grenzflächenkrägte genutzt. In dem Bereich der Leitung 22, in dem sich die Kontaktzone 60 im Meßbetriebszustand befindet, müssen hierzu Oberflächen vorhanden sein, die die Eigenschaft haben, von den Flüssigkeiten benetzt zu werden.

Im einfachsten Fall bildet ein dünner Flüssigkeitsfilm an der Wandung, der durch die Grenzflächenkräfte aufrechterhalten wird, die notwendige Flüssigkeitsbrücke. Praktische Experimente haben jedoch ergeben, daß nur in einem sehr engen Bereich der Luftblasengröße diese einserseits so groß ist, daß sie reproduzierbar und sicher angesaugt werden kann und in dem sie andererseits klein genug ist, daß der Flüssigkeitsfilm an der Wandung eine hinreichende Elektrolytbrücke bildet. Da dies in der Praxis sehr schwer zuverlässig zu realisieren ist, werden bevorzugt zusätzliche Maßnahmen ergriffen, die insgesamt dadurch charakterisiert sind, daß die Flüssigkeit der Flüssigkeitsverbindung mit festen von der Flüssigkeit benetzten Oberflächen in Kontakt steht, die so dicht beieinander angeordnet sind, daß die Flüssigkeit durch Grenzflächenkraft zwischen ihnen festgehalten wird.

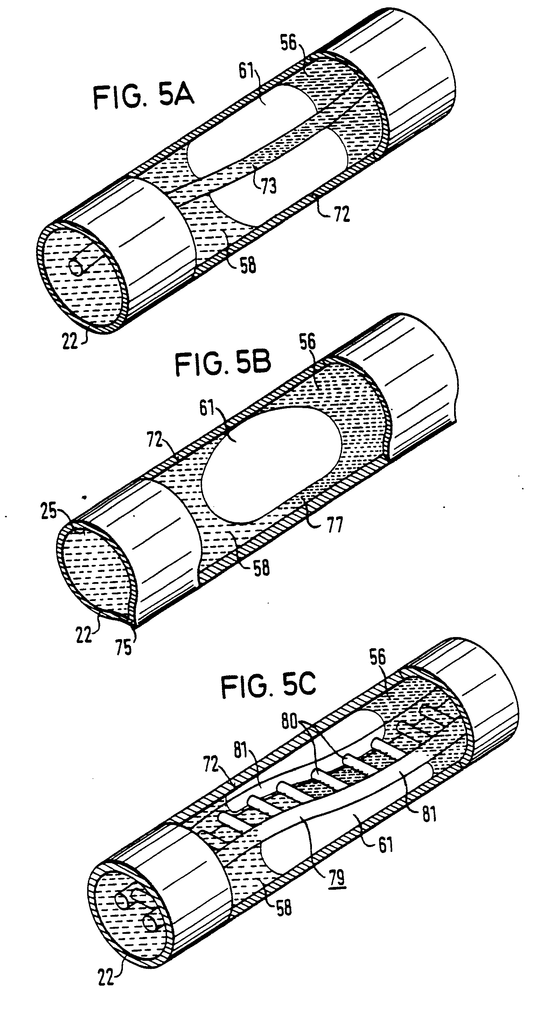

Eine der hierzu notwendigen dicht beieinander angeordneten Oberflächen kann durch die Innenwandung des die Gasblase umgebenden Gehäuses, im dargestellten Ausführungsbeispiel also durch die Innenwandung der Leitung 22 gebildet werden, die in der Fig. 5 mit dem Bezugszeichen 72 bezeichnet ist.

Fig. 5A) zeigt in einer schematisierten teilweise aufgeschnittenen perspektivischen Darstellung einen Abschnitt der Leitung 22, in dem die Gasblase 61 zu erkennen ist, die die Flüssigkeiten 56 und 58 trennt. Zur Aufrechterhaltung der elektrolytischen Verbindung ist als Einsatzteil ein dünner Faden 73 eingelegt, der aus einem von der Flüssigkeit benetzten Material besteht. Zwischen der Innenwandung 72 und der ihr zugewandten Oberfläche des Fadens 73 liegt bei dieser Ausführungsform ein enger Spalt, der aufgrund des beschriebenen Kapillareffekts mit Flüssigkeit gefüllt ist. In einem praktisch bewährten Ausführungsbeispiel wurde in eine Leitung mit einem Innendurchmesser von 0,75 mm ein Nylondraht von ca. 0,26 mm Durchmesser eingelegt. Bei einem Luftblasenvolumen von 5 µl ergab sich dabei ohne Draht ein elektrischer Widerstand über die Kontaktzone von 17,0 MΩ, ein Wert, der so hoch ist, daß eine präzise Messung der elektrochemischen Meßkettenspannung erheblich erschwert wird. Nach Einlegen des Nylondrahtes ergab sich ein Widerstand von 250 KΩ, der ohne weiteres eine genaue elektrochemische Messung erlaubt. (Der Widerstand der entsprechenden Meßstrecke ohne Luftblase lag bei 100 KΩ).

8

Eine andere Methode zur Senkung des elektrolytischen Widerstandes bei Verwendung einer trennenden Gasblase ist in Fig. 5B) dargestellt. Man erkennt, daß die Leitung 22 in diesem Fall einen asymmetrischen Querschnitt hat, der an einer Stelle des Umfanges spitz zuläuft. Dadurch ergibt sich an der Innenwandung 72 der Leitung 22 über deren Länge verlaufend ein spitzer Winkel 75. In der Nähe dieses spitzen Winkels sind die Oberflächen der Innenwandung 72 so dicht beieinander, daß ein Kapillareffekt eintritt, d. h. der Bereich zwischen den den Winkel begrenzenden Oberflächen wird vollständig gefüllt, wie dies in der Zeichnung bei dem Bezugszeichen 77 angedeutet ist. In diesem Fall ist also die die Luftblase umgebende Wandung so ausgebildet, daß beide für die Ausbildung der Flüssigkeitsverbindung notwendige Oberflächen von ihr gebildet werden. Dies könnte beispielsweise auch durch eine entsprechende Längsnut in der Innenwandung 72 der Leitung 22 realisiert werden. Ein praktisches Experiment wurde mit Hilfe eines Schlauches aus Polyvinylchlorid (Warenzeichen Tygon) durchgeführt, der einen Innendurchmesser von 2,5 mm hatte und in einer der Fig. 5B) entsprechenden Form asymmetrisch gequetscht wurde. Während des langsamen Zusammenquetschens über ein 3,8 cm langes Schlauchstück trat eine plötzliche Widerstandsänderung auf, wobei sich ohne weiteres ein Widerstandswert von etwa 75 KΩ einstellen ließ, ohne die trennende Luftblase zu beeinträchtigen.

Die in Fig. 5C) dargestellte Ausführungsform ist ein Beispiel für eine Konstruktion, bei der ein Einsatzteil verwendet wird, das sich über die Gasblase erstreckt und selbst, also ohne Zuhilfenahme der Innenwandung der Leitung hinreichend dicht beieinander angeordnete Oberflächen aufweist, um den beschriebenen Kapillareffekt zu erreichen. Es eignet sich hierfür insbesondere jede Konstruktion, bei der Längsfäden durch entsprechende Querstrukturen auf Distanz gehalten werden. Dies kann schon durch geeignetes Verflechten der Längsfäden realisiert werden, wobei hier allerdings wiederum Verunreinigungsprobleme auftreten können. Geeigneter ist deshalb eine Konstruktion, bei der die Einzelfäden durch Querstege auf Distanz zueinander gehalten werden. Fig. 5C) zeigt ein leiterförmiges Einsatzteil 79, das beispielsweise aus Polyamid bestehen kann. Die Querstreben 80 und/oder die Längsfäden 81 sind dabei so dicht beieinander angeordnet, daß einander gegenüberliegende Oberflächen nur noch einen Spalt zwischen sich lassen, der aufgrund der Grenzflächenkräfte von der Flüssigkeit in Form eines Kapillareffekts vollständig gefüllt wird.

Es lassen sich eine Vielzahl weiterer Konstruktionen für eine geeignete Flüssigkeitsverbindung angeben. Beispielsweise könnte die Innenwandung 25 der Leitung 22 Längskanäle aufweisen, die sich durch Kapillareffekt füllen. Wesentlich im Zusammenhang mit der vorliegenden Erfindung ist dabei, daß die die Flüssigkeitsverbindung bildende Flüssigkeit in unmittelbarem Kontakt mit der Gasblase steht. Würde man im Gegensatz dazu zum Beispiel einen Parallelkanal vorsehen, der in einer besonderen kapillarförmigen Leitung an der Luftblase vorbeiführt, um die notwendige Elektrolytbrücke zu realisieren, so würde auch hier eine elektrolytische Verbindung erreicht, die in dieser Kapillare befindliche Leitung würde jedoch beim Ausstoßen der Flüssigkeit in der Kapillare verbleiben und bei längerem Betrieb zu einer Verunreinigung führen.

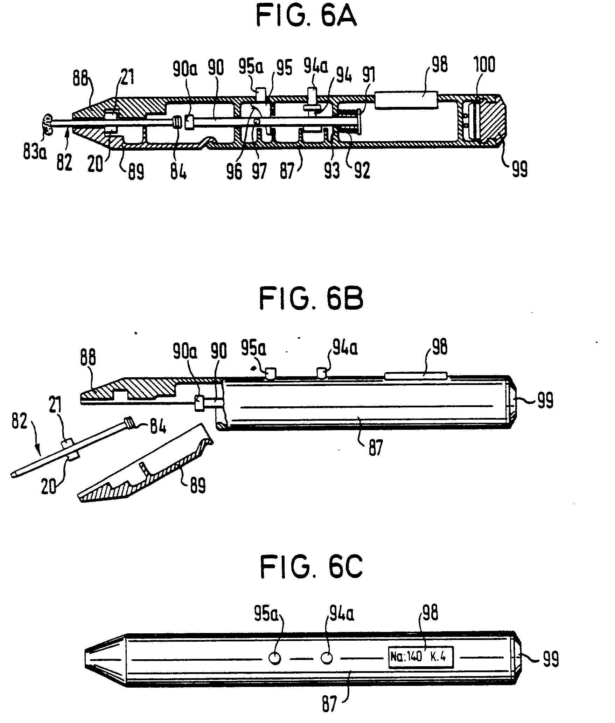

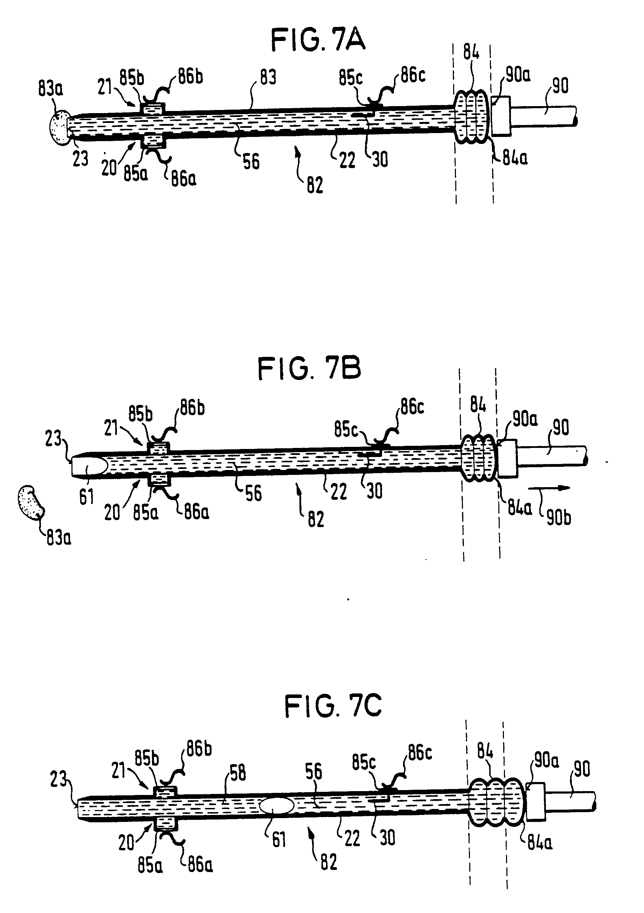

Ganz besondere praktische Handhabungsvorteile hat eine Ausführungsform des erfindungsgemäßen Gerätes, wie sie in den Fig. 6 und 7 dargestellt ist. Bei dieser Ausführungsform sind die Meßelektroden 21, 22, das Ableitelement der Referenzhalbzelle 30 und die Leitung 22 zwischen Ansaugöffnung 23 und Ableitelement 30 Teile einer auswechselbaren Baugruppe, die mit dem Bezugszeichen 82 bezeichnet ist. Fig. 6 zeigt diese Baugruppe eingebaut in einem entsprechenden Gerät, Fig. 7 in den drei Phasen A, B und C die Funktionsweise dieser bevorzugten Ausführungsform.

In Fig. 7A) erkennt man die auswechselbare Baugruppe, die im folgenden der Einfachheit halber als Einmalmeßzelle bezeichnet wird, in dem Zustand, wie sie vom Hersteller zur Benutzung in dem Gerät geliefert wird. Sie besteht im wesentlichen aus einem Kunststoffgehäuse 83, deren mittlerer rohrförmiger Teil die Leitung 22 bildet. Am in der Zeichnung links dargestellten Ende der Leitung 22 befindet sich die Ansaugöffnung 23. Sie ist bei der Einmalmeßzelle mit einem dicht verbundenen, bevorzugt einstückig angegossenen und an einer Sollbruchstelle abtrennbaren Kunststoffteil 83a verschlossen, das im folgenden als Verschlußkappe bezeichnet wird. Am jenseitigen, von der Ansaugöffnung 23 abgewandten Ende ist das Kunststoffgehäuse 83 zu einem elastischen Balg 84 ausgeformt. Das Kunststoffgehäuse 83 ist bereits vom Hersteller der Einmalzelle vollständig mit einer Referenz/Standardlösung gefüllt, die in der beschriebenen Art und Weise sowohl eine oder mehrere gesuchte Ionenarten in bekannter Konzentration enthält, als auch eine konstante Konzentration des für die Referenzhalbzelle notwendigen Elektrolyten aufweist. Zur Messung hat die Einmalmeßzelle 82 zwei verschiedene Meßelektroden 20 und 21, beispielsweise für Natrium und Kalium, sowie ein Ableitelement 30 der Referenzhalbzelle. Die Elektroden und das Ableitelement sind nach außen mit Kontaktflächen 85a, 85b und 85c verbunden, an die im eingebauten Zustand Schleifer 86a, 86b und 86c anliegen, die die Verbindung zum eigentlichen Gerät herstellen.

Der Einbau der Einmalmeßzelle 82 in das Gerät läßt sich in Fig. 6 erkennen. Das Gerätegehäuse 87 ist der einfachen Handhabung wegen im dargestellten Ausführungsbeispiel ähnlich einer im klinischen Labor üblichen Handpipette geformt. An seinem in der Figur linken Ende befindet sich die Meßzellenaufnahme 88, in die in dem in Fig. 6A) dargestellten Ausgangszustand eine Einmalmeßzelle 82 eingelegt ist. Die Meßzellenaufnahme ist mit einem Deckel 89 verschlossen. Sie ist derartig gestaltet, daß, gegebenenfalls im Zusammenwirken mit dem Deckel 89, die Einmalmeßzelle 82 nach dem Einlegen in das Gerät fest positioniert ist.

Im Zentrum des Gerätes erkennt man einen Anschlagstempel 90, der eine Anschlagfläche 90a aufweist, die dem Balg 84 der Einmalmeßzelle 82 zugewandt ist. Der Anschlagstempel 90 hat an seinem von der Anschlagfläche 90a abgewandten Ende einen Federflansch 91, gegen den eine Druckfeder 92 drückt, die sich mit ihrem anderen Ende auf einem entsprechenden Vorsprung 93 des Gehäuses 87 abstützt. Der Anschlagstempel wird in seiner in der Fig. 6A) dargestellten Position mittels eines Arretierungselementes 94 festgehalten, das mit einem Knopf 94a betätigt werden kann. Einzelheiten einer hierfür geeigneten Konstruktion sind jedem Fachmann geläufig und in der Zeichnung nicht näher dargestellt. Beim Drücken des Knopfes 94a wird die Arretierung des Anschlagstempels 90 freigegeben, so daß er sich unter der Wirkung der Feder in der Figur von links nach rechts bewegen kann. Mit einem weiteren Knopf 95a läßt sich ein Rückstellelement 95 betätigen, durch das der Anschlagstempel wieder in die in Fig. 6A) dargestellte Ausgangsposition zurückgeführt wird. In der Figur erkennt man eine Kurvenfläche 96 an dem Rückstellelement und einen quer zur Bewegungsrichtung angeordneten Stift 97, durch deren Zusammenwirken in bekannter Weise die Rückstellung erreicht wird. Schließlich ist aus der Figur die Anordnung der Meß- und Anzeigeeinheit 98 und der unter einem Deckel 99 sitzenden Batterie 100 zu ersehen.

Aus Fig. 7 geht hervor, wie diese bevorzugte Konstruktion benutzt wird. Fig. 7A) zeigt, wie beschrieben, die Ausgangslage nach dem Einlegen in das Gerät. Zwischen dem Hinterende 84a und der Anschlagfläche 90a des Anschlagstempels 90 befindet sich ein schmaler Spalt. Dreht man nun die Verschlußkappe 83a von dem Kunststoffgehäuse 83 ab, so dehnt sich der Balg 84 aufgrund seiner Eigenspannung aus, bis seine Fläche 84a an der Fläche 90a anliegt. Dabei wird eine Luftblase 61 in das vordere Ende der Einmalmeßzelle 82 eingesaugt, wie dies in Fig. 7B) dargestellt ist. Dabei kontaktiert die Referenz/Standardlösung 56 nach wie vor sowohl die Meßelektroden 20 und 21 als auch das Ableitelement der Referenzhalbzelle. Die Kalibrationsmessung kann sowohl in dem in Fig. 7A) als auch in dem in Fig. 7B) dargestellten Betriebszustand durchgeführt werden.

Nun wird die Ansaugöffnung 23 in die Probenflüssigkeit eingetaucht und der Knopf 94a des Arretierungselements 94 betätigt, so daß sich der Anschlagstempel 90, wie beschrieben und durch den Pfeil 90b in Fig. 7B) angedeutet, vom Balg 84 weg bewegt. Dadurch kann sich der Balg 84 weiter entspannen, und es wird Probenflüssigkeit in die Ansaugöffnung 23 angesaugt, bis die in Fig. 7C) dargestellte Position erreicht ist, bei der der Balg 84 wiederum an der Anschlagfläche 90a des Anschlagstempels 90 anliegt. Die Kontaktzone zwischen der Referenz/Standardlösung 56 und der Probenflüssigkeit 58 mit der Luftblase 61 befindet sich nun zwischen den Meßelektroden 20, 21 und dem Ableitelement 30 der Referenzhalbzelle. Damit ist der Meßbetriebszustand erreicht und die Spannungsmeßeinrichtung kann aktiviert werden, um die für die gesuchte Konzentration der zu bestimmenden Ionenarten in der Probenflüssigkeit charakteristische Meßspannung zu bestimmen.

Durch Betätigen des Knopfes 95a wird über das Rückstellelement 95 der Anschlagstempel 90 in die Ausgangslage zurückbewegt. Dabei wird mit Hilfe einer in der Fig. 6 der Übersichtlichkeit halber nicht dargestellten einfachen Mechanik die Arretierung des Deckels 89 gelöst, so daß sich dieser öffnet und die Einmalmeßzelle 82 herausfällt, wie dies in Fig. 6B) dargestellt ist.

Fig. 6C) zeigt das entsprechende Gerät in einer um 90° um seine Längsachse gedrehten Position, um die äußere Gestaltung und die Anordnung der Bedienungsknöpfe 94a und 95a sowie der Anzeige 98 zu verdeutlichen.

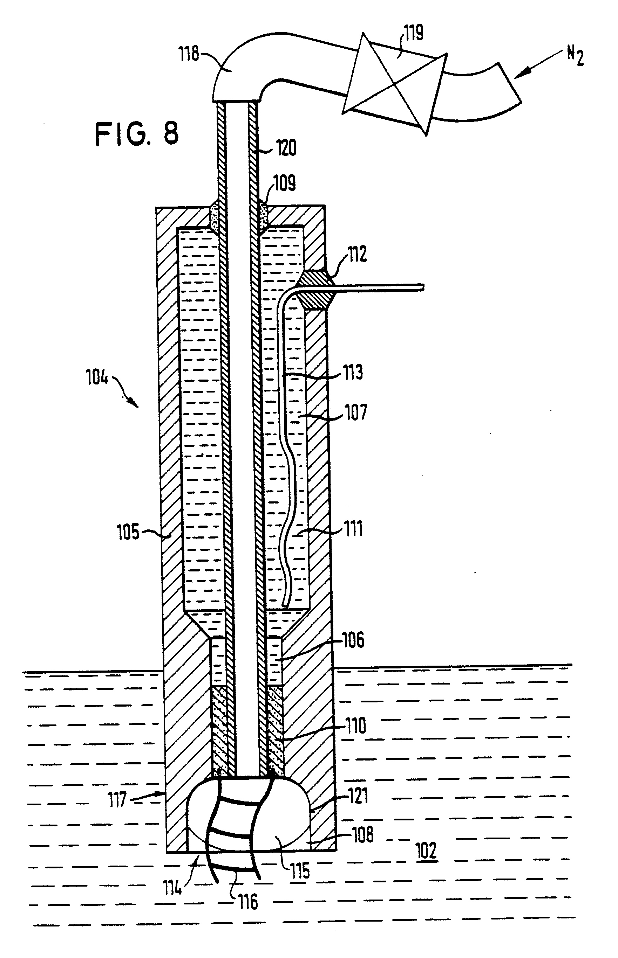

Fig. 8 zeigt im wesentlichen im Querschnitt ein Referenzhalbelement, welches eine Elektrolytbrücke gemäß der Erfindung aufweist. Die Gasblase befindet sich hier aber nicht, wie bei dem in den Fig. 2 bis 6 beschriebenen Fall, in einer Leitung, in der die Referenzflüssigkeit und die Probenflüssigkeit durch die Gasblase getrennt strömen, sondern sie befindet sich in einem stationären Referenzhalbelement, welches im Zusammenhang mit einem konventionellen Elektrolyt-Analysator, wie er in Fig. 1 dargestellt ist, statt des Referenzhalbelements 4 benutzt werden kann.

Das in Fig. 8 dargestellte Referenzhalbelement 104 hat ein Gehäuse 105 mit einer Innenbohrung, die einen verhältnismäßig engen mittleren Bereich 106, einen erweiterten oberen Bereich 107 und einen erweiterten unteren Bereich 108 aufweist.

Zentral in dem mittleren und oberen Bereich 106, 107 befindet sich ein Gasrohr 120, das mit einer Klebedichtung 109 flüssigkeitsdicht an dem Gehäuse 105 befestigt ist. Am unteren Ende des Gasrohres 120 befindet sich zwischen dessen äußerer Wandung und der inneren Wandung des mittleren Bereichs 106 ein gestopfter Docht 110 oder ein ähnliches poröses Gebilde. Seine Porösität muß so bemessen sein, daß der oberhalb davon im wesentlichen im oberen Bereich 107 der Innenbohrung des Gehäuses 105 befindliche Referenzelektrolyt 111 nicht nach unten auslaufen kann. In den Elektrolyt reicht durch eine flüssigkeitsdichte Durchführung 112 ein Ableitelement 113, beispielsweise ein chloridisierter Silberdraht im Falle eines Ag/AgCl-Referenzhalbelements.

Der untere erweiterte Bereich 108 der Innenbohrung des Gehäuses 105 bildet ein topfförmiges nach unten offenes Gehäuse 114 für die Gasblase 115. Das Referenzhalbelement 104 ist in eine Probenflüssigkeit 102 eingetaucht entsprechend dem Halbelement 4 in die Flüssigkeit 2 in Fig. 1. Der wesentlichen Unterschied zu der dort dargestellten Konstruktion ist der, daß die einen diffusiven Austausch der Ionen ermöglichende und gleichzeitig eine Vermischung weitgehend verhindernde Elektrolytbrücke hier nicht mit Hilfe einer Fritte, eines Glasschliffes oder ähnlicher Konstruktionen realisiert ist, sondern mit der Gasblase 115, die durch ein leiterförmiges Einsatzteil 116 überbrückt ist, welches dem im Zusammenhang

EP 0 121 742 B1

mit Fig. 5C) beschriebenen Einsatzteil im wesentlichen entspricht. Die Gasblase wird durch Einblasen von Gas, beispielsweise Luft oder gegebenenfalls Stickstoff, durch den Schlauch 118 in das Gasrohr 120 erzeugt und bleibt nach dem Schließen des Absperrventils 119 in dem topförmigen Gehäuse 114 bestehen.

Ein derartiges Referenzhalbelement mit Gasblase kann kaum verstopfen. Dabei ist zu beachten, daß der gestopfte Docht 110 nicht mit der Probenflüssigkeit 102 unmittelbar in Kontakt kommt und deswegen wesentlich weniger als die engen Kanäle der bisher bekannten Elektrolytbrücken zum Verstopfen neigt. Dabei ist auch wichtig, daß seine Kapillaren relativ eng sein können. Er muß nur so dicht sein, daß die Referenzelektrolytflüssigkeit 111 in dem Gehäuse 105 verbleibt, was relativ einfach zu realisieren ist, zumal das Gehäuse allseitig geschlossen ist.

Die Gasblase ist bei der dargestellten Ausführungsform durch Zuführen und Ablassen von Gas sogar in ihrer Größe während des Betriebs veränderbar. Durch Einblasen von zusätzlichem Gas kann man sie so groß machen, daß eine praktisch vollständige Trennung zwischen beiden Flüssigkeiten erreicht wird, wenn das Gerät über längere Zeit nicht benutzt wird. Zum Betrieb wird dann wieder etwas Gas abgelassen, bis die hinreichende Leitfähigkeit über die Elektrolytbrücke erreicht ist. Dabei kann statt des leiterförmigen Einsatzteils 116 selbstverständlich auch eine andere der zuvor beschriebenen Konstruktionen verwendet werden, wobei die Innenwandung 121 des topförmigen Gehäuses 114 bevorzugt aus einem benetzten Material besteht.

**Patentansprüche**

1. Gerät zur elektrochemischen Analyse elektrolytischer Bestandteile in einer Probenflüssigkeit (58, 102), insbesonder einer Körperflüssigkeit, mit einer für eine zu analysierende Ionenart selektiven Meßelektrode (20), einer Referenzhalbzelle, die ein im Betriebszustand mit einem Referenzelektrolyten (56, 111) zusammenwirkendes Ableitelement (30, 113) einschließt, einer Elektrolytbrücke zwischen der Probenflüssigkeiten (58, 102) und dem Referenzelektrolyt (56, 111) und einer Spannungsmeßeinrichtung (34) zum Messen der Spannung zwischen der Meßelektrode (20) und dem Ableitelement (30, 113), welche in einem Meßbetriebszustand aktivierbar ist, dadurch gekennzeichnet, daß eine Einrichtung zur Erzeugung und Aufrechterhaltung einer Gasblase (61, 115) zwischen der Probenflüssigkeit (58, 102) und dem Referenzelektrolyten (56, 111) vorgesehen ist und daß in dem Bereich, in dem sich die Gasblase im Meßbetriebszustand befindet, eine feste, von der Flüssigkeit benetzte Oberfläche oder feste, von der Flüssigkeit benetzte Oberflächen so ausgebildet ist bzw. sind, daß die Gasblase im Meßbetriebszustand mittels einer durch Grenzflächenkraft aufrechterhaltenen Flüssigkeitsverbindung elektrolytisch überbrückt ist und die Flüssigkeitsverbindung in unmittelbarem Kontakt mit der Gasblase (61, 115) steht, so daß die Elektrolytbrücke durch die Gasblase und die Flüssigkeitsverbindung gebildet wird.

2. Gerät nach Anspruch 1, dadurch gekennzeichnet, daß die zur Aufrechterhaltung der Flüssigkeitsverbindung dienenden Oberflächen so dicht beieinander angeordnet sind, daß die Flüssigkeit durch Grenzflächenkraft zwischen ihnen festgehalten wird.

3. Gerät nach Anspruch 2, dadurch gekennzeichnet, daß die Oberflächen zu einem Einsatzteil (79, 116) gehören, das sich über die Gasblase (61, 115) erstreckt und hinreichend dicht zueinander angeordnete Bauteile aufweist.

4. Gerät nach Anspruch 2, dadurch gekennzeichnet, daß mindestens eine der Oberflächen durch die die Luftblase umgebende Wandung (72, 121) gebildet wird.

5. Gerät nach Anspruch 4, dadurch gekennzeichnet, daß ein Einsatzteil (73) vorgesehen ist, dessen Oberfläche mit der Oberfläche der Wandung (72) zusammenwirkt, um die Flüssigkeit durch Grenzflächenkraft festzuhalten.

6. Gerät nach einem der Ansprüche 1 bis 5, dadurch gekennzeichnet, daß die Gasblase (61, 115) durch Zuführen oder Ableiten von Gas in ihrer Größe veränderbar ist.

7. Gerät nach einem der Ansprüche 1 bis 6, dadurch gekennzeichnet, daß die Meßelektrode (20) an einer mit einer Ansaugöffnung (23) versehenen Leitung (22) für Probenflüssigkeit (58) angeordnet ist, das Ableitelement (30) der Referenzhalbzelle dergestalt an der Leitung (22) angeordnet ist, daß es eine darin befindliche Flüssigkeit (56) unmittelbar kontaktiert, wobei das Ableitelement (30) in der Leitung (22) in Ansaugrichtung hinter der Meßelektrode (20) angeordnet ist, eine Ansaugvorrichtung (36) vorhanden ist, durch die eine Probenflüssigkeit (58) ansaugbar und zusammen mit einem in der Leitung (22) vorhandenen oder zuvor angesaugten flüssigen Referenzelektrolyten (56) im Anschluß an diesen in der gleichen Richtung in der Leitung (22) transportierbar ist, wobei die Gasblase bereits beim Transportieren der Flüssigkeiten (58, 56) durch die Leitung (22) zwischen diesen vorhanden ist und die Ansaugvorrichtung (36) und die Spannungsmeßeinrichtung (34) derart steuerbar sind, daß im Meßbetriebszustand die Probenflüssigkeit (58) die Meßelektrode (20) und die Referenzflüssigkeit (56) das Ableitelement (30) kontaktiert und die Gasblase (61) sich im Bereich der Flüssigkeitsverbindung befindet, so daß beide Flüssigkeiten (56, 58) über die Gasblase hinweg in einem Ionenaustausch ermöglichenden Kontakt zueinander stehen.

8. Gerät nach Anspruch 7, dadurch gekennzeichnet, daß der Referenzelektrolyt (56) zugleich die zu bestimmende Ionenart in bekannter Aktivität enthält, so daß er eine kombinierte Referenz/Standardlösung

11

bildet und die Spannungsmeßeinrichtung in einem Kalibrationsbetriebszustand aktivierbar ist, in dem der in der Leitung vorhandene oder zuvor angesaugte Referenzelektrolyt sowohl die Meßelektrode als auch die Ableitelektrode der Referenzhalbzelle kontaktiert, um einen Kalibrationsmeßwert zu gewinnen.

9. Gerät nach Anspruch 7 oder 8, dadurch gekennzeichnet, daß die Ansaugvorrichtung (36) derart steuerbar ist, daß sie bestimmte Ansaugvolumina stufenweise ansaugt, wobei das Ansaugvolumen für die Probenflüssigkeit (58) und das Volumen der Leitung (22) derart aufeinander abgestimmt sind, daß nach dem Ansaugen der Probenflüssigkeit (58) im Meßbetriebszustand die Gasblase (61) im Leitungsbereich zwischen der Meßelektrode (20) und dem Ableitelement (30) angeordnet ist.

10. Gerät nach einem der Ansprüche 8 oder 9, dadurch gekennzeichnet, daß die Meßelektrode (20), das Ableitelement (30) der Referenzhalbzelle und die Leitung (22) zwischen Ansaugöffnung (23) und Ableitelement (30) zu einer auswechselbaren Baugruppe des Elektrolytanalysators zusammengefaßt sind, die den flüssigen Referenzelektrolyten (56) vorgepackt enthält.

11. Gerät nach Anspruch 10, dadurch gekennzeichnet, daß die auswechselbare Baugruppe (82) ein Kunststoffteil ist, das an der Ansaugöffnung (23) ein manuell entfernbares angegossenes Verschlußteil (83a) und an seinem von der Ansaugöffnung (23) abgewandten Ende einen vorgespannten Balg (84) aufweist, daß ein Anschlag (90a) vorgesehen ist, durch den der Bewegungsbereich des Balges (84) in seiner Ausdehnungsrichtung dergestalt beschränkt ist, daß die Volumenausdehnung bis zum Anliegen an den Anschluß (90a) dem zum Ansaugen der Luftblase anzusaugenden Volumen entspricht und daß der Anschlag zum Ansaugen der Probenflüssigkeit entfernbar ist, wobei der Bewegungsbereich des Balges (84), gegebenenfalls bis zum Anliegen an einen weiteren Anschlag, dem zum Erreichen des Meßbetriebszustandes anzusaugenden Probenflüssigkeitsvolumen entspricht.

12. Gerät nach einem der vorhergehenden Ansprüche, dadurch gekennzeichnet, daß die Leitung (22), die Meßelektrode (20), die Referenzhalbzelle und die Ansaugvorrichtung (36) in einem nach Art einer Handpipette gestalteten Gehäuse (24, 87) integriert sind.

## Claims

1. Device for the electrochemical analysis of electrolytic components in a test liquid (58, 102), especially of a body fluid, with a selective measurement electrode (20) for a kind of ion to be analysed, a reference half cell, which includes a conducting-off element (30, 113) co-operating in the operational state with a reference electrolyte (56, 111), an electrolyte bridge between the test liquids (58, 102) and the reference electrolyte (56, 111) and a voltage measurement device (34) for the measurement of the voltage between the measurement electrode (20) and the conducting-off element (30, 113), which is activatable in the measurement operational state, characterised in that a device is provided for the production and maintenance of a gas bubble (61, 115) between the test liquid (58, 102) and the reference electrolyte (56, 111) and that, in the region in which the gas bubble is present in the measurement operational state, a solid surface wetted by the liquid or solid surfaces wetted by the liquid is or are so formed that the gas bubble in the measurement operational state is electrolytically bridged by a liquid connection maintained by surface tension force and the liquid connection stands in direct contact with the gas bubble (61, 115) so that the electrolyte bridge is formed by the gas bubble and the liquid connection.

2. Device according to claim 1, characterised in that the surfaces serving for the maintenance of the liquid connection are arranged so close to one another that the liquid is firmly held between them by boundary surface force.

3. Device according to claim 2, characterised in that the surfaces belong to an insert part (79, 116) which extends over the gas bubble (61, 115) and has constructional parts arranged sufficiently close to one another.

4. Device according to claim 2, characterised in that at least one of the surfaces is formed by the wall (72, 121) surrounding the air bubble.

5. Device according to claim 4, characterised in that an insert part (73) is provided, the surface of which co-operates with the surface of the wall (72) in order firmly to hold the liquid by boundary surface force.

6. Device according to one of claims 1 to 5, characterised in that the gas bubble (61, 115) is changeable in its size by introduction or removal of gas.

7. Device according to one of claims 1 to 6, characterised in that the measurement electrode (20) is arranged on a pipe (22) for test liquid (58) provided with a sucking-in opening (23), the conducting-off element (30) of the reference half cell is arranged on the pipe (22) in such a manner that it directly contacts a liquid (56) present therein, whereby the conducting-off element (30) is arranged in the pipe (22) in the sucking-in direction behind the measurement electrode (20), a sucking-in device (36) is present through which a test liquid (58) can be sucked in and, together with a liquid reference electrolyte (56) present in the pipe (22) or previously sucked in, is transportable subsequent to this in the same direction in the pipe (22), whereby the gas bubble is already present, in the case of the transporting of the liquids (58, 56) through the pipe (22), between these and the sucking-in device (36) and the voltage measurement device (34) are controllable in such a manner that, in the measurement operational state, the test liquid (58), the measurement electrode (20) and the reference liquid (56) contact the conducting-off element (30) and the gas bubble (61) is present in the region of the liquid connection so that both liquids (56, 58) are in contact with one another away over the gas bubble making possible an ion exchange.

8. Device according to claim 7, characterised in that the reference electrolyte (56) at the same time contains the ion type to be determined in known activity so that it forms a combined reference/standard solution and the voltage measurement device is activatable in a calibration operational state in which the reference electrolyte present in the pipe or previously sucked in contacts not only the measurement electrode but also the conducting-off electrode of the reference half cell in order to obtain a calibration measurement value.

9. Device according to claim 7 or 8, characterised in that the sucking-in device (36) is controllable in such a manner that it sucks in stepwise definite sucked-in volumes, whereby the sucking-in volume for the test liquid (58) and the volume of the pipe (22) are so attuned to one another that, after the sucking in of the test liquid (58) in the measurement operational state, the gas bubble (61) is arranged in the pipe region between the measurement electrode (20) and the conducting-off element (30).

10. Device according to one of claims 8 or 9, characterised in that the measurement electrode (20), the conducting-off element (30) of the reference half cell and the pipe (22) between sucking-in opening (23) and conducting-off element (30) are combined to an exchangeable constructional unit of the electrolyte analyser which contains the liquid references electrolytes (56) pre-packed.

11. Device according to claim 10, characterised in that the exchangeable constructional unit (82) is a synthetic resin part which, on the sucking-in opening (23), has a manually removable cast-on closure part (83a) and, on its end remote from the sucking-in opening (23), has a pre-stressed bellows (84), that a stop (90a) is provided by means of which the movement region of the bellows (84) is limited in its direction of extension in such a manner that the volume extension up to coming to lie against the stop (90a) corresponds to the volume to be sucked in for the sucking in of the air bubble and that the stop is, for the sucking in of the test liquid, removable, whereby the movement region of the bellows (84), optionally up to coming to lie against a further stop, corresponds to the test liquid volume to be sucked up for the achievement of the measurement. operational state.

12. Device according to one of the preceding claims, characterised in that the pipe (22), the measurement electrode (20), the reference half cell and the sucking-in device (36) are integrated into a housing (24, 87) made in the manner of a hand pipette.

## Revendications

1. Appareil pour l'analyse électrochimique de constituants électrolytiques dans un liquide d'essai (58, 102), en particulier un liquide de l'organisme, avec une électrode de mesure (20) sélective pour un type d'ions à analyser, une demi-cellule de référence qui comprend un élément récepteur (30, 113) agissant à l'état opérationnel conjointement avec un électrolyte de référence (56, 111), un pont électrolytique entre les liquides d'essai (58, 102) et l'électrolyte de référence (56, 111) et un potentiomètre (34) pour la mesure de la tension entre l'électrode de mesure (20) et l'élément récepteur (30, 113) qui est activable dans un état opérationnel de mesure, caractérisé en ce qu'un dispositif pour la formation et le maintien d'une bulle de gaz (61, 115) entre le liquide d'essai (58, 102) et l'électrolyte de référence (56, 111) est prévu et en ce que, dans la zone où se trouve la bulle de gaz, en état opérationnel de mesure, une surface ferme occupée par le liquide ou des surfaces fermes occupées par le liquide se forme ou se forment de telle manière que la bulle de gaz, en état opérationnel de mesure, est reliée électrolytiquement par l'intermédiaire d'une liaison liquide maintenue par une force interfaciale et la liaison liquide se trouve en contact direct avec la bulle de gaz (61, 115) de sorte que le pont électrolytique est formé par la bulle de gaz et la liaison liquide.

2. Appareil selon la revendication 1, caractérisé en ce que les surfaces servant au maintien de la liaison liquide sont si rapprochées que le liquide est retenu entre elles par une force interfaciale.

3. Appareil selon la revendication 2, caractérisé en ce que les surfaces appartiennent à une partie constituante (79, 116) qui s'étend au-dessus de la bulle de gaz (61, 115) et présente des composants suffisamment rapprochés les uns des autres.

4. Appareil selon la revendication 2, caractérisé en ce qu'au moins une des surfaces est formée par la paroi (72, 121) entourant la bulle de gaz.

5. Appareil selon la revendication 4, caractérisé en ce qu'une partie constituante (73) est prévue, dont la surface agit conjointement avec la surface de la paroi (72) pour retenir le liquide par une force interfaciale.

6. Appareil selon une des revendications 1 à 5, caractérisé en ce que la taille de la bulle de gaz (61, 115) peut être modifiée par amenée ou évacuation de gaz.

7. Appareil selon une des revendications 1 à 6, caractérisé en ce que l'électrode de mesure (20) est disposée sur une conduite (22) pour le liquide d'essai (58), pourvue d'un orifice d'aspiration (23), l'élément récepteur (30) de la demi-cellule de référence est disposé sur la conduite (22) de telle manière qu'il est en contact direct avec un liquide (56) qui s'y trouve, l'élément récepteur (30) étant placé dans la conduite (22) dans le sens de l'aspiration derrière l'électrode de mesure (20), un dispositif d'aspiration (36) est présent, par lequel un liquide d'essai (58) peut être aspiré et transporté dans la conduite (22) à la

13

**EP 0 121 742 B1**

suite et dans la même direction qu'un électrolyte de référence liquide (56) présent dans la conduite (22) ou aspiré précédemment, la bulle de gaz étant déjà présente entre les liquides (58, 56) lors de leur transport dans la conduite (22) et le dispositif d'aspiration (36) et le potentiomètre (34) peuvent être réglés de telle manière que, dans l'état opérationnel de mesure, le liquide d'essai (58), l'électrode de mesure (20) et le liquide de référence (58) son en contact avec l'élément récepteur (30) et la bulle de gaz (61) se trouve dans la zone de la liaison liquide de sorte que par dessus la bulle de gaz, les deux liquides (58, 56) se trouvent en contact permettant un échange d'ions.

8. Appareil selon la revendication 7, caractérisé en ce que l'électrolyte de référence (56) contient aussi le type d'ion à déterminer avec une activité connue de sorte qu'il représente une solution de référence/étalon combinée et le potentiomètre peut être activé dans un état opérationnel d'étalonnage, dans lequel l'électrolyte de référence présent ou aspiré au préalable dans la conduite est en contact aussi bien avec l'électrode de mesure qu'avec l'électrode réceptrice de la demi-cellule de référence, pour obtenir une valeur de mesure d'étalonnage.

9. Appareil selon la revendication 7 ou 8, caractérisé en ce que le dispositif d'aspiration (36) peut être réglé de telle manière qu'il aspire progressivement des volumes d'aspiration déterminés, le volume aspiré pour le liquide d'essai (58) et le volume de la conduite (22) étant ajustés l'un par rapport à l'autre de telle manière qu'après l'aspiration du liquide d'essai (58), dans l'état opérationnel de mesure, la bulle de gaz (61) se trouve dans la conduite dans la zone entre l'électrode de mesure (20) et l'élément récepteur (30).

10. Appareil selon une des revendications 8 ou 9, caractérisé en ce que l'électrode de mesure (20), l'élément récepteur (30) de la demi-cellule de référence et la conduite (22) entre l'orifice d'aspiration (23) et l'élément récepteur (30) sont rassemblés en un sous-ensemble interchangeable de l'analyseur électrolytique, chargé au préalable avec l'électrolyte de référence liquide (56).

11. Appareil selon la revendication 10, caractérisé en ce que le sous-ensemble interchangeable (82) est un élément en plastique qui présente, au niveau de l'orifice d'aspiration (23) une pièce d'obturation coulée pouvant être enlevée manuellement (83a) et à son extrémité opposée à l'orifice d'aspiration (23) un soufflet précomprimé (84), en ce qu'une butée (90a) est prévue par laquelle l'amplitude de mouvement du soufflet (84) est limitée dans le sens de sa détente de telle manière que le volume de détente jusqu'au contact avec la butée (90a) correspond au volume devant être aspiré pour l'aspiration de la bulle de gaz et en ce que la butée peut être enlevée pour l'aspiration du liquide d'essai, l'amplitude du mouvement du soufflet (84), éventuellement jusqu'au contact avec une autre butée, correspondant au volume de liquide d'essai devant être aspiré pour atteindre l'état opérationnel de mesure.

12. Appareil selon une des revendications précédentes, caractérisé en ce que la conduite (22), l'électrode de mesure (20), la demi-cellule de référence et le dispositif d'aspiration (36) sont intégrés dans une monture (24, 87) conçue selon le principe d'une pipette manuelle.

FIG. 1

# FIG. 2

# FIG. 3

FIG. 4

FIG. 5A

FIG. 5B

FIG. 5C

5

## FIG. 6A

## FIG. 6B

## FIG. 6C

Na:140 K.4

# FIG. 7A

# FIG. 7B

# FIG. 7C

FIG. 8